# EUROPEAN PATENT APPLICATION

(11) **EP 4 478 174 A1**
(43) Date of publication of application: **18.12.2024**
(21) Application number: 23775313.2
(22) Date of filing: 23.03.2023
(51) Int. Cl.: G06F 3/14, E02F 9/26, G06F 3/04842, G06F 3/0482

(54) **SYSTEM FOR OPERATING APPLICATIONS OF CONSTRUCTION EQUIPMENT, AND OPERATION METHOD THEREFOR**

(30) Priority: 23.03.2022 KR 20220036255
(71) Applicant: HD Hyundai Infracore Co., Ltd., Incheon 22502 (KR)
(72) Inventor: SONG, Seong Ho, Incheon 22502 (KR); SON, Young Woon, Incheon 22502 (KR); KIM, Yoon Hye, Incheon 22502 (KR); YU, Wook Hyun, Incheon 22502 (KR); JEONG, Seok Hwa, Incheon 22502 (KR); KIM, Han Sol, Incheon 22502 (KR)
(74) Representative: Isarpatent
(86) International application number: PCT/KR2023/003824
(87) International publication number: WO 2023/182817

(57) **Abstract**

Disclosed is a system configured to operate applications of a construction equipment, including: a plurality of displays; and a control device connected to the plurality of displays through wired or wireless communication and configured to control to display execution screens of a plurality of applications in the plurality of displays, and the control device may be configured to: determine a layout mode of each of the plurality of displays; and control to display an execution screen of at least one application in each of the plurality of displays according to the determined layout mode, and the layout mode may include at least one among an entire screen mode in which an execution screen of one application is displayed in a specified application display area, and a divided screen mode in which the specified application display area is divided into two or more areas and execution screens of different applications are displayed in each of the division areas.

## Description

### [Technical Field]

Various embodiments of the present disclosure relates to a system for operating applications of a construction equipment and an operation method thereof.

### [Background Art]

As construction equipments become electronic, various types of electronic devices (electronic parts, or electronic control unit) are provided in the construction equipments, and various services using the electronic devices continuously have been developed.

When a new services for a construction equipment is developed, the industry of the construction equipment installs an application for the corresponding service in a separate display device other than the construction equipment and releases the application installed in the display device. Accordingly, a plurality of display devices supporting various services may be mounted in the cabin of the construction equipment. For example, various display devices such as a display device supporting a cluster service, a display device supporting an around view monitor (AVM) service, a display device supporting a 3D machine guidance service, a display device supporting a heating, ventilation and air-conditioning (HVAC) service, a display device supporting a radio service, a display device supporting a weighing service, and a display device supporting a tilt-rotator service may be mounted in the cabin of the conventional construction equipment.

### [DISCLOSURE]

### [Technical Problem]

However, due to spatial constraints of the cabin of the construction equipment, the quantity of display devices which can be mounted inside the cabin may be limited. Therefore, a state in which a display device desired by the driver cannot be installed may occur. In addition, as described above, if a plurality of display devices are mounted in the cabin of the construction equipment, there may occur a problem that the devices interrupt a view of the driver in a forward direction.

Therefore, the object of the various embodiments of the present disclosure is to provide a system for simultaneously operating a plurality of applications of the construction equipment by means of a limited quantity of display devices.

The technical problem to be achieved by the present disclosure is not limited to the above-mentioned technical problem, and other technical problems that are not mentioned will be clearly understood by ordinary-skilled persons in the art to which the present disclosure pertains from the following description.

### [Technical Solution]

One embodiment is a system configured to operate applications of a construction equipment, including: a plurality of displays; and a control device connected to the plurality of displays through wired or wireless communication and configured to control to display execution screens of a plurality of applications in the plurality of displays, and the control device may be configured to: determine a layout mode of each of the plurality of displays; and control to display an execution screen of at least one application in each of the plurality of displays according to the determined layout mode, and the layout mode may include at least one among an entire screen mode in which an execution screen of one application is displayed in a specified application display area, and a divided screen mode in which the specified application display area is divided into two or more areas and execution screens of different applications are displayed in each of the division areas.

According to the embodiment of the present disclosure, the control device may determine the layout mode according to attributes of the plurality of applications.

According to the embodiment of the present disclosure, the control device may provide a user interface capable of setting the layout mode of the plurality of displays through one among the plurality of displays; and set up the layout mode of at least one among the plurality of displays based on an input by a user through the user interface.

According to the embodiment of the present disclosure, the control device may determine one among the plurality of displays to be a main display and a remaining one thereof to be a sub display based on the input by a user through the user interface; and dispose one specified application among the plurality of applications in the main display or the sub display with priority.

According to the embodiment of the present disclosure, when the layout mode of the main display is the divided screen mode, the control device may divide application display area of the main display into two or more division areas; and dispose the specified application in a first division area among the two or more division areas with priority.

According to the embodiment of the present disclosure, the control device may dispose an application other than the specified application in a second division area among the two or more division areas.

According to the embodiment of the present disclosure, the control device may determine a main display based on at least one among size information of each of display areas of the plurality of displays, resolution information of each of the plurality of displays, communication method information of each of the plurality of displays, and order information of the plurality of displays connected to the control device, and provide the user interface through the main display.

According to the embodiment of the present disclosure, when a layout mode of a first display among the plurality of displays is the divided screen mode, the control device may divide application display area of the first display into two or more division areas; and control the first display such that each of the division areas displays execution screens of different applications based on an input by a user with respect to the two or more division areas.

According to the embodiment of the present disclosure, when an event of selecting an application to be executed is detected with respect to an entire area of the entire screen mode or each of the division areas of the divided screen mode according to the layout mode determined for each of the plurality of displays, the control device may display a list of applications executable in the area in which the event of selecting an application to be executed is detected; select one application from the list; and control an execution screen of the selected application to be displayed in the area in which the event of selecting an application to be executed is detected.

According to the embodiment of the present disclosure, in a state in which an execution screen of a first application is displayed in a first area of one display among the plurality of displays, the control device may detect an input by a user requiring execution of a second application in the first area; change an area in which the execution screen of the first application is displayed to a second area according to an attribute of the first application in response to the input by a user; and control an execution screen of the second application to be displayed in the first area.

Another embodiment is a system configured to operate applications of a construction equipment, including: two different displays; and a control device connected to the two displays through wired or wireless communication and configured to control to display execution screens of a plurality of applications in the two displays, and the control device may be configured to: determine a layout mode of each of the two displays based on a plurality of applications selected by a user and the two displays; and control to display an execution screen of at least one application in each of the two displays according to the determined layout mode.

According to the embodiment of the present disclosure, the layout mode may include at least one among an entire screen mode in which an execution screen of one application is displayed in a specified application display area, and a divided screen mode in which the specified application display area is divided into two or more areas and execution screens of different applications are displayed in each of the division areas, and the control device may determine the layout mode according to attributes of each of the plurality of applications selected by a user.

Still another embodiment is a method for operating a control device provided in a construction equipment, including: controlling to display execution screens of a plurality of applications in a plurality of displays provided in the construction equipment, and the controlling to display execution screens of a plurality of applications may include: determining a layout mode of each of the plurality of displays; and controlling to display an execution screen of at least one application in each of the plurality of displays according to the determined layout mode, and the layout mode may include at least one among an entire screen mode in which an execution screen of one application is displayed in a specified application display area, and a divided screen mode in which the specified application display area is divided into two or more areas and execution screens of different applications are displayed in each of the division areas.

According to the embodiment of the present disclosure, the determining a layout mode of each of the plurality of displays may include: determining one among the plurality of displays to be a main display; and setting up a layout mode of at least one among the plurality of displays based on an input by a user.

According to the embodiment of the present disclosure, the controlling to display an execution screen of at least one application in each of the plurality of displays according to the determined layout mode may include: when a layout mode of a first display among the plurality of displays is the divided screen mode, dividing application display area of the first display into two or more areas; and controlling the first display such that each of the two or more areas displays execution screens of different applications based on an input by a user with respect to the two or more areas.

According to the embodiment of the present disclosure, the controlling to display an execution screen of at least one application in each of the plurality of displays according to the determined layout mode may include: when an event of selecting an application to be executed is detected with respect to an entire area of the entire screen mode or each of the division areas of the divided screen mode according to the layout mode determined for each of the plurality of displays, displaying a list of applications executable in the area in which the event of selecting an application to be executed is detected; selecting one application from the list; and controlling an execution screen of the selected application to be displayed in the area in which the event of selecting an application to be executed is detected.

According to the embodiment of the present disclosure, the controlling to display an execution screen of at least one application in each of the plurality of displays according to the determined layout mode may include: displaying an execution screen of a first application in a first area of one display among the plurality of displays according to the determined layout mode; detecting an input by a user requiring execution of a second application in the first area; and changing an area in which the execution screen of the first application is displayed to a second area according to an attribute of the first application in response to the input by a user; and displaying an execution screen of the second application in the first area.

### [Advantageous Effect]

According to various embodiments of the present disclosure, by simultaneously operating a plurality of applications of the construction equipment by means of a limited quantity of display devices, it is possible to reduce costs for purchasing a display device for a new service, and to minimize interruption of the view of the driver.

### [Description of Drawings]

FIG. 1 is a configuration of a service providing system of a construction equipment which operates a plurality of applications according to various embodiments of the present disclosure.
FIG. 2 is an example illustration of operating a plurality of applications in a service providing system of a construction equipment according to various embodiments of the present disclosure.
FIG. 3 is an example illustration representing whether a layout mode is supported per application according to various embodiments of the present disclosure.
FIG. 4 is a flowchart for operating a plurality of applications in a control device of a construction equipment according to various embodiments of the present disclosure.
FIGS. 5 and 6 are example illustrations of a screen configuration for setting up a layout mode of a display according to various embodiments of the present disclosure.
FIG. 7 is a flowchart for executing an application with respect to a selected area in a control device of a construction equipment according to various embodiments of the present disclosure.
FIG. 8 is an example illustration of a screen configuration when a layout mode of display devices according to various embodiments of the present disclosure is a divided screen mode.
FIG. 9 is an example illustration of a screen configuration which provides a list of applications executable in a selected area according to various embodiments of the present disclosure.
FIG. 10 is a detailed flowchart for executing an application with respect to a selected area in a control device of a construction equipment according to various embodiments of the present disclosure.
FIGS. 11 to 19 are example illustrations of a screen configuration which operates a plurality applications simultaneously according to various embodiments of the present disclosure.

The same or the similar reference numerals may be used to denote the same or the similar elements regarding description of the drawings.

### [Mode for Invention]

The merits and characteristics of the present disclosure and a system, a device and a method for achieving the merits and characteristics will become more apparent from the embodiments described in detail in conjunction with the accompanying drawings. However, the present disclosure is not limited to the disclosed embodiments, but may be implemented in various different ways. The embodiments are provided to only complete the disclosure of the present disclosure and to allow those skilled in the art to understand the category of the present disclosure. The present disclosure is defined by the category of the claims. The same reference numerals will be used to refer to the same or similar elements throughout the drawings.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. As used herein, the term "and/or" includes, but is not limited to any and all combinations of one or more of the associated listed items.

The terms used in the present specification are for describing example embodiments and are not intended to limit the inventive concept. In the present specification, a singular form also includes a plural form unless particularly stated in the phrase. Components, steps, operations and/or elements that are referred to by terms "comprises" and/or "comprising" used in the inventive concept do not exclude presence or addition of one or more other components, steps, operations and/or elements.

Although the terms "first", "second", and the like are used for describing various components, these components are not confined by these terms. These terms are merely used for distinguishing one component from the other components.

Therefore, a first component to be mentioned below may be a second component in a technical concept of the present disclosure. Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the related art and will not be interpreted in an idealized or overly formal sense unless expressly so defined herein.

A term "part" or "module" used in the embodiments may mean software components or hardware components such as a field programmable gate array (FPGA), an application specific integrated circuit (ASIC). The "part" or "module" performs certain functions. However, the "part" or "module" is not meant to be limited to software or hardware. The "part" or "module" may be configured to be placed in an addressable storage medium or to restore one or more processors. Thus, for one example, the "part" or "module" may include components such as software components, object-oriented software components, class components, and task components, and may include processes, functions, attributes, procedures, subroutines, segments of a program code, drivers, firmware, microcode, circuits, data, databases, data structures, tables, arrays, and variables. Components and functions provided in the "part" or "module" may be combined with a smaller number of components and "parts" or "modules" or may be further divided into additional components and "parts" or "modules".

Methods or algorithm steps described relative to some embodiments of the present invention may be directly implemented by hardware and software modules that are executed by a processor or may be directly implemented by a combination thereof. The software module may be resident on a RAM, a flash memory, a ROM, an EPROM, an EEPROM, a resistor, a hard disk, a removable disk, a CD-ROM, or any other type of record medium known to those skilled in the art. An exemplary record medium is coupled to a processor and the processor can read information from the record medium and can record the information in a storage medium. In another way, the record medium may be integrally formed with the processor. The processor and the storage medium may reside in an application specific integrated circuit (ASIC). The ASIC may be resident within a user's terminal.

Hereinafter, the construction equipment in the present disclosure may mean an equipment or a machine used in the construction site. For example, the construction equipment may include at least one among an excavator, a dump truck, a bulldozer, a loader, a forklift, a scraper, a crane, a motor grader, a roller, a road stabilizer, a concrete batching plant, a concrete finisher, a concrete spreader, a concrete mixer truck, a concrete pump, an asphalt finisher, an asphalt distributor, a mobile crusher, a drilling equipment, a pile driver, a gravel digging equipment, and a tower crane. The listed construction equipments are merely examples, and various embodiments of the present disclosure are not limited thereto.

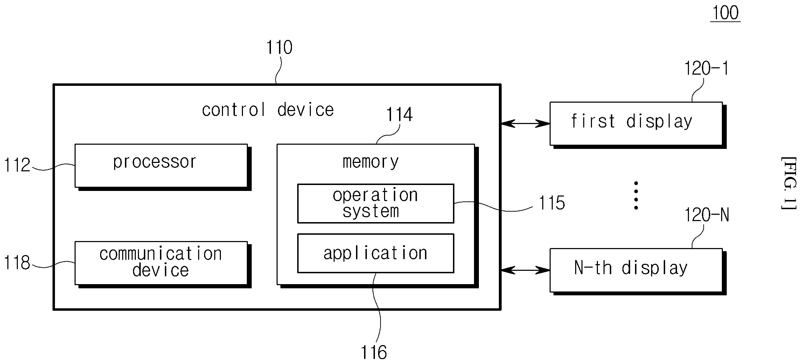

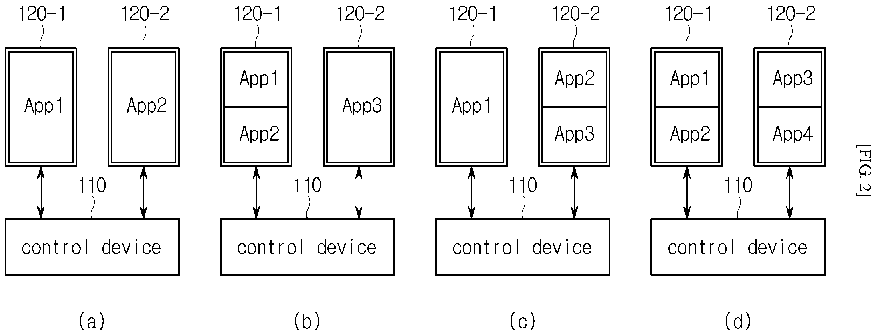

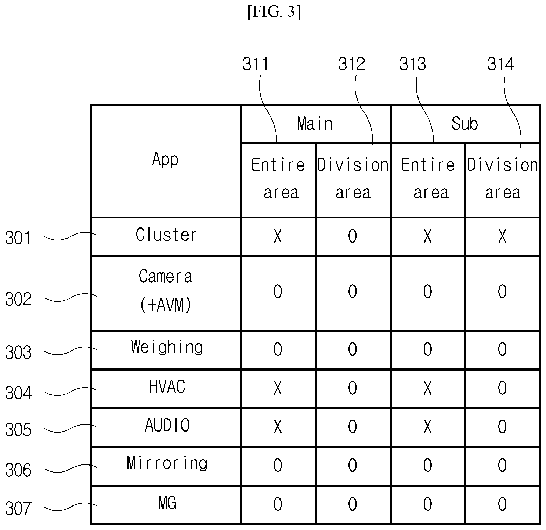

FIG. 1 is a configuration of a service providing system of a construction equipment which operates a plurality of applications according to various embodiments of the present disclosure. Hereinafter, operations of at least some of the components illustrated in FIG. 1 will be described with reference to FIGS. 2 and 3. FIG. 2 is an example illustration of operating a plurality of applications in a service providing system of a construction equipment according to various embodiments of the present disclosure, and FIG. 3 is an example illustration representing whether a layout mode is supported per application according to various embodiments of the present disclosure.

Referring to FIG. 1, a service providing system 100 according to various embodiments of the present disclosure may include a control device 110, and a plurality of displays 120-1 to 120-N. The system configuration as above is merely an example, and various embodiments of the present disclosure are not limited thereto. For example, the service providing system 100 of the construction equipment 100 may further include at least one other component (e.g., an input device (not illustrated), an audio output device (not illustrated), a sensor (not illustrated)) other than the above-described components.

According to various embodiments, the control device 110 is an electronic device provided in the construction equipment, and may be connected through wired and/or wireless communication with at least one other component (e.g., a plurality of displays (120-1 to 120-N), an input device (not illustrated), an audio output device (not illustrated), a sensor (not illustrated)) provided in the construction equipment so as to receive or send various data and information related to an operation of the construction equipment.

According to various embodiments, the control device 110 may be connected through wired and/or wireless communication with the plurality of displays 120-1 to 120-N so as to receive or send various data and information for a simultaneous operation of a plurality of applications. The application may be referred to as an app, and hereinafter, the term, `application' and the term `app' may be used in the same sense.

According to various embodiments, the control device 110 may include a processor 112, a memory 114, and a communication device 118.

According to various embodiments, the processor 112 may drive a software program (e.g., an operation system 115, and/or an application 116) stored in the memory 114 so as to control a component (e.g., the plurality of displays 120-1 to 120-N, or an input device (not illustrated)) connected to the control device 110 and/or the processor 112, and perform various data processing and arithmetic operations.

According to various embodiments, the processor 112 may perform a control operation so as to simultaneously operate the plurality of applications by using the plurality of displays 120-1 to 120-N connected to the control device 110 through wired and/or wireless communication.

According to the embodiment, the processor 112 may determine a layout mode of each of the plurality of displays 120-1 to 120-N. The layout mode may include a divided screen mode and an entire screen mode. The divided screen mode refers to a mode in which a specified application display area of an entire display screen is divided into a plurality of areas, and an execution screen of each different application is displayed in each of the division areas. The entire screen mode refers to a mode in which an execution screen of one application is displayed in a specified application display area. The specified application display area may be referred to as an entire area. The specified application display area is a specified area in the entire screen such that an execution screen of an application can be displayed therein, and may include at least some area of the entire screen area. According to the embodiment, each of the layout mode of the plurality of displays 120-1 to 120-N may be set up as one among the entire screen mode and the divided screen mode by the designer, and may be set up and/or changed according to an input by the user. According to the embodiment, each of the layout mode of the plurality of displays 120-1 to 120-N may be determined based on attribute information of at least one application of which execution is requested by the user, and/or information related to each of the plurality of displays. The attribute information of an application may include a layout mode supported by the corresponding application, and/or information related to a display capable of displaying an execution screen of the corresponding application. The information related to a display may include, for example, resolution information of a display, and performance information of a display.

According to the embodiment, the processor 112 may detect an event of selecting a layout mode. The event of selecting a layout mode may occur by an input by the user, by a power-ON event of at least one display among the plurality of displays 120-1 to 120-N connected to the control device 110, or when a new display is connected to the control device 110. The input by a user may be detected by at least one among the plurality of displays 120-1 to 120-N, or a separate input device (not illustrated).

According to the embodiment, when the event of setting up a layout mode is detected, the processor 112 may determine one among the plurality of displays 120-1 to 120-N as a main display, and may provide a user interface capable of setting up a layout mode for each of the plurality of displays 120-1 to 120-N through the determined main display. For example, the processor 112 may determine a first display 120-1 among the plurality of displays 120-1 to 120-N as a main display, and perform control such that a screen through which a layout mode of the first display 120-1 and a layout mode of a N-th display 120-N can be set up and/or changed can be displayed in a display area of the first display 120-1. The main display may be determined based on at least one among an input by the user, performance information of each of the plurality of displays 120-1 to 120-N, a communication method with respect to each of the plurality of displays 120-1 to 120-N, and a time point when each of the plurality of displays 120-1 to 120-N are connected to (or registered to) the control device 110. For example, the processor 112 may determine one among the plurality of displays 120-1 to 120-N to be the main display based on a size of the display area of each of the plurality of displays 120-1 to 120-N, and/or resolution information of each of the plurality of displays 120-1 to 120-N. As another example, the processor 112 may determine a display connected to the control device 110 through wired communication among the plurality of displays 120-1 to 120-N to be the main display. As still another example, the control device 110 may determine a display first connected to the control device 110 among the plurality of displays 120-1 to 120-N to be the main display. The above-described method for determining the main display is merely an example, and various embodiments of the present disclosure are not limited thereto.

According to the embodiment, when detecting the event of selecting a layout mode, the processor 112 may provide each of the plurality of displays 120-1 to 120-N with a user interface capable of setting up a layout mode of a corresponding display. For example, the processor 112 may perform control such that a screen capable of setting up and/or changing a layout mode of the first display 120-1 can be displayed in a display area of the first display 120-1, and a screen capable of setting up and/or changing a layout mode of the N-th display 120-N can be displayed in a display area of the N-th display 120-N.

According to the embodiment, the processor 112 may perform control such that an execution screen of one or a plurality of applications can be displayed in each of the plurality of displays 120-1 to 120-N according to a layout mode of each of the plurality of displays 120-1 to 120-N. For example, when the first display 120-1 and a second display 120-2 are connected to the control device 110, the processor 112 may simultaneously operate a plurality of applications as illustrated in FIG. 2, based on a layout mode of each of the first display 120-1 and the second display 120-2. For example, when the layout mode of the first display 120-1 and the second display 120-2 is the entire screen mode, as illustrated in (a) of FIG. 2, the processor 112 of the control device 110 may perform control such that an execution screen of a first application App1 can be displayed in the first display 120-1, and an execution screen of a second application App2 can be displayed in the second display 120-2. When a layout mode of the first display 120-1 is the divided screen mode, and a layout mode of the second display 120-2 is the entire screen mode, as illustrated in (b) of FIG. 2, the processor 112 of the control device 110 may perform control such that an execution screen of the first application App1 and an execution screen of the second application App2 can be displayed in the first display 120-1, and an execution screen of a third application App3 can be displayed in the second display 120-2. When a layout mode of the first display 120-1 is the entire screen mode, and a layout mode of the second display 120-2 is the divided screen mode, as illustrated in (c) of FIG. 2, the processor 112 of the control device 110 may perform control such that an execution screen of the first application App1 can be displayed in the first display 120-1, and an execution screen of the second application App2 and an execution screen of the third application App3 can be displayed in the second display 120-2. When a layout mode of the first display 120-1 and the second display 120-2 is the divided screen mode, as illustrated in (d) of FIG. 2, the processor 112 of the control device 110 may perform control such that an execution screen of the first application App1 and an execution screen of the second application App2 can be displayed in the first display 120-1, and an execution screen of the third application App3 and an execution screen of a fourth application App4 can be displayed in the second display 120-2. For convenience of the description, an example in which a specified application display area is divided into two areas is taken in FIG. 2, however, various embodiments of the present disclosure are not limited thereto. For example, the specified application display area may be divided into three or more areas.

According to the embodiment, the processor 112 may detect an event of selecting an application to be executed, in the entire area or the division area according to a layout mode of each of the plurality of displays 120-1 to 120-N. The event of selecting an application to be executed may be detected through an input by the user in a specified manner for the corresponding area (e.g., a double touch, a long touch, a single touch, a pressed touch, a multi-touch, or a drag), or an input by the user through the input device (not illustrated) connected to the control device 110.

According to the embodiment, the processor 112 may perform control such that a list of applications executable in the corresponding area can be displayed, upon detecting an event of selecting an application to be executed in the entire area or the division area according to a layout mode. The list of applications executable in the corresponding area may include information on identification of an application (e.g., title) and/or graphic data (e.g., an icon) of an application. According to the embodiment, the processor 112 may determine applications which can be executed in each area, based on at least one among size information of each of the specified application display areas of the plurality of displays 120-1 to 120-N, information on a resolution which can be supported by each application, information on a screen ratio which can be supported by each application, and information on a layout mode which can be supported by each application. At this instance, the size information of each of the specified application display areas may include size information of the entire area (e.g., a resolution, an aspect ratio), and/or size information of the division area (e.g., a resolution, an aspect ratio). According to the embodiment, as illustrated in FIG. 3, the processor 112 may store a table representing applications which can be executed per area, based on the above-described information. FIG. 3 may show that in the entire area 311 of the main display, applications such as a camera 302, a weighing 303, a mirroring 306, and an MG 307 can be executed, and applications such as a cluster 301, the camera 302, the weighing 303, a HVAC 304, an audio 305, the mirroring 306, and the MG 307 can be executed in the division area 312 of the main display. According to the embodiment, when a layout mode of the main display is the divided screen mode, the processor 112 may dispose a certain application (e.g., the cluster 301) in a first division area among the division areas, and dispose any one application (e.g., the camera 302 etc.), other than the certain application, in a second division area. That is, the processor 112 may dispose a certain application in a specified area of the display with priority.

In addition, it is possible to represent that the camera 302, the weighing 303, the mirroring 306, and the MG 307 applications may be executed in the entire area 313 of the sub display, and the camera 302, the weighing 303, the HVAC 304, the audio 305, the mirroring 306, and the MG 307 applications may be executed in the division area 314 of the sub display. As illustrated in FIG. 3, based on the table representing applications which can be executed per area, the processor 112 may generate a list of applications executable in an area in which an input by the user for selecting an application to be executed is detected.

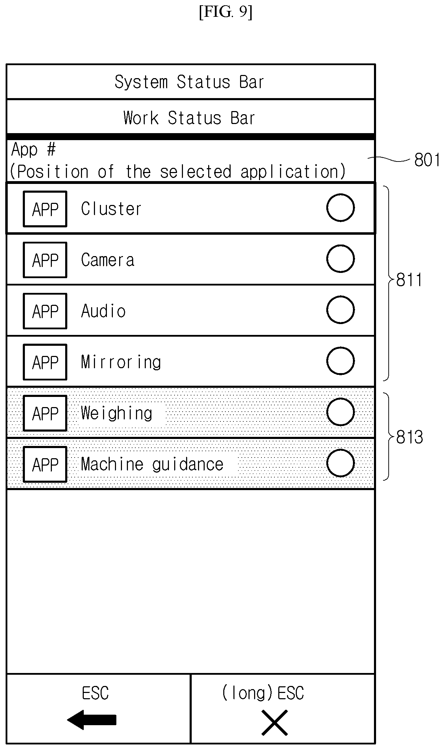

According to the embodiment, based on the input by the user with respect to the list of executable applications, the processor 112 may select an application to be executed in a first area (e.g., the entire area, or the division area), and control to display an execution screen of the selected application in the first area. At this time, the processor 112 may perform an additional processing with respect to the selected application and/or the other application, based on whether an execution screen of the selected application is displayed in a second area which is the other area, or whether there is the other application of which an execution screen is displayed in the first area, and/or whether the other application can be executed in the second area. With regard to the above, description in detail will be provided below with reference to FIG. 9.

According to various embodiments of the present disclosure, the memory 114 may store various data which is used by at least one component inside the control device 110, and input data and output data with respect to the related commands. The various data which is used by at least one component inside the control device 110 may be, for example, an operating system 115, and/or a software program such as an application 116 which can be executed in the operating system 115. The operating system 115, for example, may control a system resource of the control device 110, and include one or more driver programs configured to drive at least one component inside the control device 110. The application 116 is a program configured to provide a service related to various operations of the construction equipment, and may include, for example, the cluster, an AVM (around view monitor), a 3D machine guidance, the HVAC (Heating, Ventilation and Air Conditioning), the radio, the weighing, and a tilt-rotator. According to an embodiment, the memory 114 may store the table representing applications which can be executed per area according to a layout mode of each of the plurality of displays 120-1 to 120-N connected to the control device 110. For example, the memory 114 may store a table as illustrated in FIG. 3.

According to various embodiments, the communication device 118 may support establishment of a wired or wireless communication channel with respect to the control device 110 and each of the plurality of displays 120-1 to 120-N, and execution of communication through the established communication channel. According to the embodiment, the communication device 118 may include at least one among a wired communication module and a wireless communication module (e.g., a short range wireless communication module).

According to various embodiments, each of the plurality of displays 120-1 to 120-N may be input and output devices with respect to the applications executed in the control device 110. Each of the plurality of displays 120-1 to 120-N is an additional device which is physically separated from the control device 110, and may be connected to the control device 110 through the wired and/or wireless communication. Each of the plurality of displays 120-1 to 120-N may receive or send various data and information for a simultaneous operation of a plurality of applications, through the wired and/or wireless communication, from or to the control device 110. According to the embodiment, each of the plurality of displays 120-1 to 120-N may display graphic data received from the control device 110 in the screen area. According to the embodiment, each of the plurality of displays 120-1 to 120-N may detect an input by the user to the screen area, and provide the control device 110 with information on the input by the user. For example, each of the plurality of displays 120-1 to 120-N may be a touch sensitive display which includes a touch sensor. According to the embodiment, the plurality of displays 120-1 to 120-N may include at least one display embedded in the construction equipment, and at least one display physically separable from the construction equipment. The at least one display embedded in the construction equipment may include a cluster.

Hereinafter, for convenience of description, a case in which the first display 120-1 and the second display 120-2 are connected to the control device 110 will be assumed and described. However, the examples of the present disclosure may be applied in the same manner to a case in which three or more displays are connected to the control device 110.

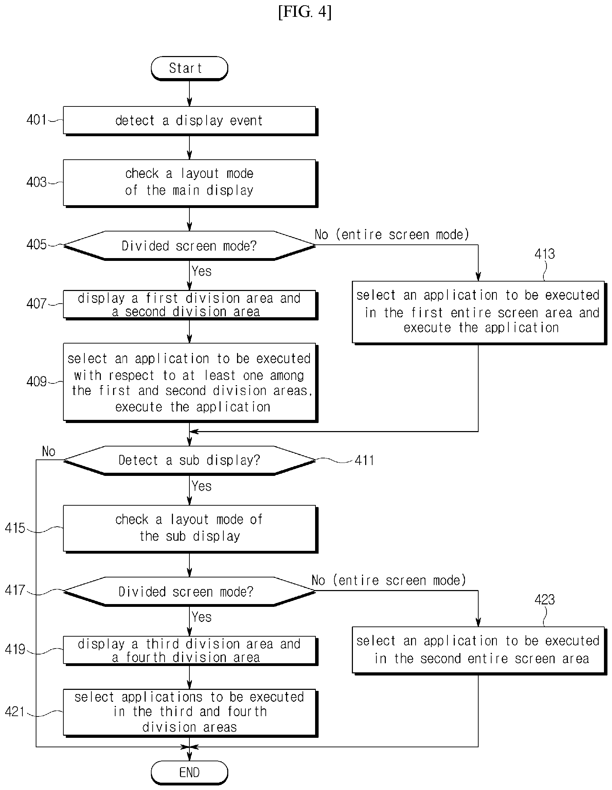

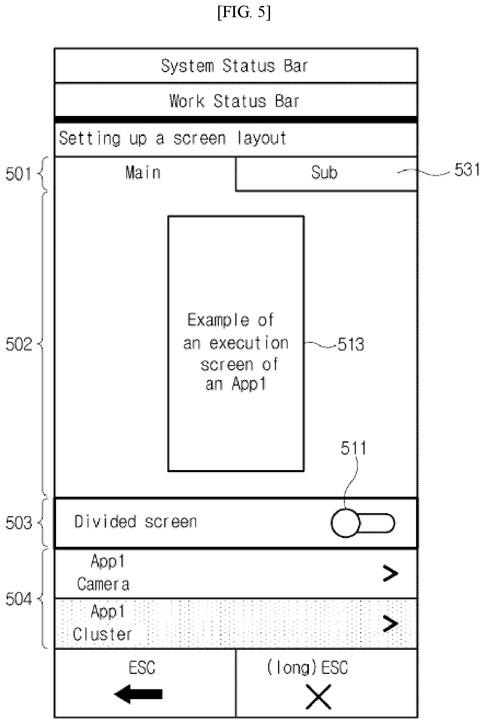

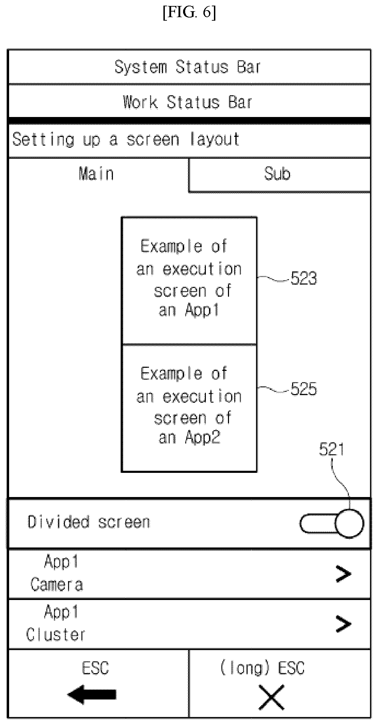

FIG. 4 is a flowchart for operating a plurality of applications in the control device of the construction equipment according to various embodiments of the present disclosure. Hereinafter, a block indicated with a dotted line in FIG. 4 may be omitted according to the embodiment. The control device in FIG. 4 may be the control device 110 in FIG. 1. Hereinafter, each operation in the embodiment may be performed sequentially, but the operations are not required to be performed sequentially. The order of the operations may be changed, and at least two operations may be performed in parallel. Hereinafter, at least some operation of the FIG. 4 may be described with reference to FIG. 5 and FIG. 6. FIGS. 5 and 6 are example illustrations of a screen configuration for setting up a layout mode of the display according to various embodiments of the present disclosure.

Referring to FIG. 4, the control device 110 in an operation 401 may detect a display event. The display event may occur by power-on of the control device 110 and/or at least one display, or the input by the user.

In an operation 403, the control device 110 may check a layout mode of the main display. As described referring to FIG. 1, the main display may be determined based on at least one among the input by the user, performance information of the first display 120-1 and the second display 120-2, a communication method of the first display 120-1 and the second display 120-2, and a time point when each of the first display 120-1 and the second display 120-2 is connected to (or registered to) the control device 110. Hereinafter, for convenience of description, a case in which the first display 120-1 is determined to be the main display and the second display 120-2 is determined to the sub display, the control device 110 will be assumed and described. For example, the control device 110 may check a layout mode of the first display 120-1, which is the main display. The layout mode of the first display 120-1 may be set up at the time of a designing process, or may be set up and/or changed by the user. The control device 110 may obtain information on the layout mode set up by the designer and/or the user, through communication with the first display 120-1.

According to the embodiment, the layout mode may be set up and/or changed through a first user interface as illustrated in FIGS. 5 and 6. The first user interface may include, for example, a display options tab area 501, a layout mode example area 502, a layout mode setting area 503, and an executable application display area 504.

The display options tab area 501 may include a main tab for displaying a layout mode setting screen of the main display, and a sub tab for displaying a layout mode setting screen of the sub display. For example, when the input by the user to the sub tab 531 is detected in a state in which the layout mode setting screen of the main display is displayed in the first display 120-1, the control device 110 may control the first display 120-1 such that the layout mode setting screen of the main display switches to the layout mode setting screen of the sub display.

The layout mode example area 502 may show whether a specified application display area is divided according to the current set layout mode. For example, when the current set layout mode is the entire screen mode, the control device 110 may control the first display 120-1 such that the application display area in the layout mode example area 502 is not divided, and an execution screen example 513 of the first application App1 can be displayed. As another example, when the current set layout mode is the divided screen mode, the control device 110 may control the first display 120-1 such that the application display area in the layout mode example area 502 is divided, and an execution screen example 523 of the first application App1 and an execution screen example 525 of the second application App2 can be displayed in each divided area.

The layout mode setting area 503 is an area to allow to set up a layout mode of a corresponding display to be the entire screen mode or the divided screen mode, and may include a divided screen activation button 551. For example, when the divided screen activation button 551 is at a specified inactivation position 511, the control device 110 may set up a layout mode of the corresponding display to be the entire screen mode, and when the divided screen activation button 551 is moved to a specified activation position 521, the control device 110 may set up a layout mode of the corresponding display to be the divided screen mode.

The executable application display area 504 may show whether each application supports the current set layout mode. For example, when the current set layout mode is the entire screen mode, the control device 110 may control the first display 120-1 such that the camera application which is executable in the entire screen mode which is not divided can be displayed to be in an active state, and the cluster application which is inexecutable in the entire screen mode can be displayed to be in an inactive state. As another example, the control device 110 may control the first display 120-1 such that when the current set layout mode is the divided screen mode, the camera application and the cluster application executable in the division area can be displayed to be in an active state.

In an operation 405, the control device 110 may check whether the checked layout mode is the divided screen mode. As a result of the check in the operation 405, when the layout mode of the main display is the divided screen mode, the control device 110 may perform control such that the first and the second division areas can be displayed in the main display in an operation 407. For example, the first display 120-1 which is the main display may divide the application display area of the entire screen area into a first division area and a second division area and display the division areas according to the control of the control device 110.

In an operation 409, the control device 110 may select an application to be executed in at least one area among the first and second division areas, and control the selected application to be executed in the corresponding division area. For example, the control device 110 may select an application to be executed in the first division area, and control an execution screen of the selected application to be displayed in the first division area. In addition, the control device 110 may select an application to be executed in the second division area, and control an execution screen of the selected application to be displayed in the second division area.

As a result of the check in the operation 405, when the layout mode of the main display is the entire screen mode, the control device 110 may select an application to be executed in the first entire screen area, and control the selected application to be displayed in the first entire screen area in an operation 413. The first entire screen area may include an entirety of a specified application display area of the main display. For example, the control device 110 may select an application to be executed in the first entire screen area, and control an execution screen of the selected application to be displayed in the first entire screen area.

In an operation 411, the control device 110 may determine whether there is the sub display. For example, the control device 110 may determine whether there is the second display 120-2 previously connected to (or previously registered to) the control device 110, or the second display 120-2 to be newly connected thereto.

When there is the sub display, the control device 110 may check a layout mode of the sub display in an operation 415. A layout mode of the sub display may be set up at the time of the designing process, or may be set up and/or changed by the user. For example, a layout mode of the sub display may be set up and/or changed through the first user interface which has been described in the operation 403 with reference to FIGS. 5 and 6.

In an operation 417, the control device 110 may check whether a layout mode of the sub display is the divided screen mode. As a result of the check in the operation 417, when the layout mode of the main display is the divided screen mode, the control device 110 may perform control such that the third and the fourth division areas can be displayed in the sub display in an operation 419. For example, the second display 120-2 which is the sub display may divide the specified application display area of the entire screen area into a third division area and a fourth division area and display the division areas according to the control of the control device 110.

In an operation 421, the control device 110 may select an application to be executed in at least one area among the third and fourth division areas, and control the selected application to be executed in the corresponding division area. For example, the control device 110 may select an application to be executed in the third division area, and control an execution screen of the selected application to be displayed in the third division area. In addition, the control device 110 may select an application to be executed in the fourth division area, and control an execution screen of the selected application to be displayed in the fourth division area.

As a result of the check in the operation 417, when the layout mode of the sub display is the entire screen mode, the control device 110 may select an application to be executed in the second entire screen area, and control the selected application to be displayed in the second entire screen area in an operation 423. The second entire screen area may include an entirety of a specified application display area of the sub display. For example, the control device 110 may select an application to be executed in the second entire screen area, and control an execution screen of the selected application to be displayed in the second entire screen area.

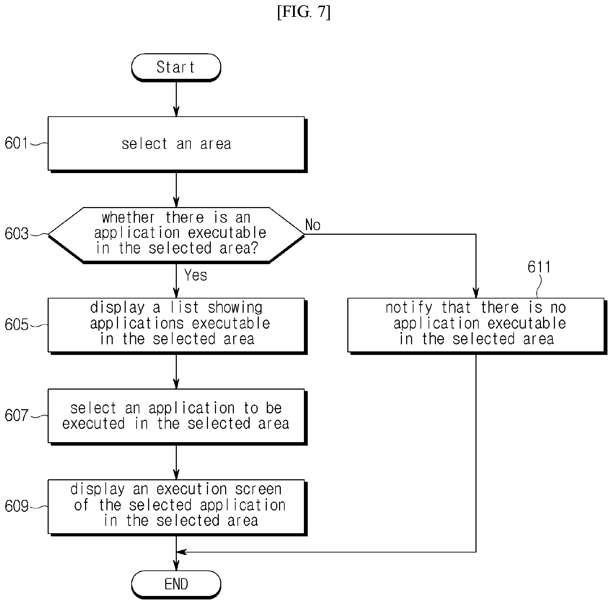

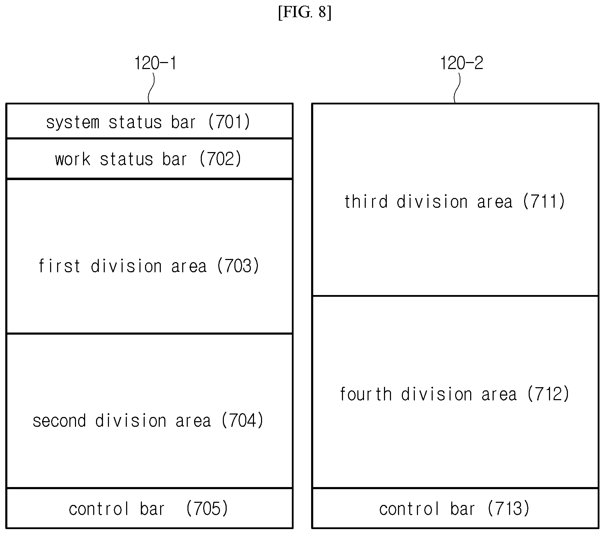

FIG. 7 is a flowchart for executing an application with respect to a selected area in the control device of the construction equipment according to various embodiments of the present disclosure. Operations with reference to FIG. 7 hereinafter may be detailed operation of the operations 409, 413, 421, or 423 in FIG. 4. Hereinafter, each operation in FIG. 7 may be performed sequentially, but the operations are not required to be performed sequentially. For example, the order of the operations may be changed, and at least two operations may be performed in parallel. Hereinafter, operations of at least some of the components illustrated in FIG. 7 will be described with reference to FIGS. 8 and 9. FIG. 8 is an example illustration of a screen configuration when a layout mode of display devices according to various embodiments of the present disclosure is the divided screen mode, and FIG. 9 is an example illustration of a screen configuration which provides a list of applications executable in a selected area according to various embodiments of the present disclosure.

Referring to FIG. 7, in an operation 601, the control device 110 may select an area based on an input by the user. For example, the control device 110 may communicate with the first display 120-1 and the second display 120-2 to check an area in which the input by the user is detected, and select the checked area. For example, if the screen configuration of the first display 120-1 and the second display 120-2 is the same as what is illustrated in FIG. 7, the control device 110 may detect the input by the user with respect to one among a first division area 703, a second division area 704, a third division area 711, and a fourth division area 712, and select the area in which the input by the user is detected. At this time, FIG. 8 is an example illustration of a case in which a layout mode of the first display 120-1 and the second display 120-2 is the divided screen mode. In each of the first display 120-1 and the second display 120-2, control bars 705 and 713 are displayed, and a system status bar 701 and a work status bar 702 may be further displayed in the first display 120-1 which is the main display.

In an operation 603, the control device 110 may determine whether there is an application executable in the selected area. For example, the control device 110 may check whether there is an application executable in the selected area based on a table showing applications executable per area as illustrated in FIG. 3.

If there is an application executable in the selected area, in an operation 605, the control device 110 may control to display a list showing applications executable in the selected area. For example, as illustrated in FIG. 9, the control device 110 may control to display a list 801 including identification information of applications 811 executable in the selected area. The list 801 may include identification information of applications 813 inexecutable in the selected area and the identification information of applications 813 inexecutable in the selected area may be displayed to be in an inactive state. The inactive state may mean a state in which selection through the input by the user is impossible.

In an operation 607, the control device 110 may select an application to be executed in the selected area. For example, based on the input by the user, the control device 110 may select the cluster application among the executable applications from the list 801 as illustrated in FIG. 9.

In an operation 609, the control device 110 may control to display an execution screen of the selected application in the selected area. For example, in an operation 601, when the selected area is the first division area, the control device 110 may control to display an execution screen of the cluster application in the first division area.

If there is no application executable in the selected area, the control device 110 may control the display to show a message notifying that there is no application executable in the selected area in the operation 609.

It is possible to display a list showing applications executable in a selected area. For example, the control device 110 may display the list 801 including identification information of applications 811 executable in the selected area, as illustrated in FIG. 8. According to the embodiment, the control device 110 may notify that there is no application executable in the selected area to the user, and propose to change a layout mode.

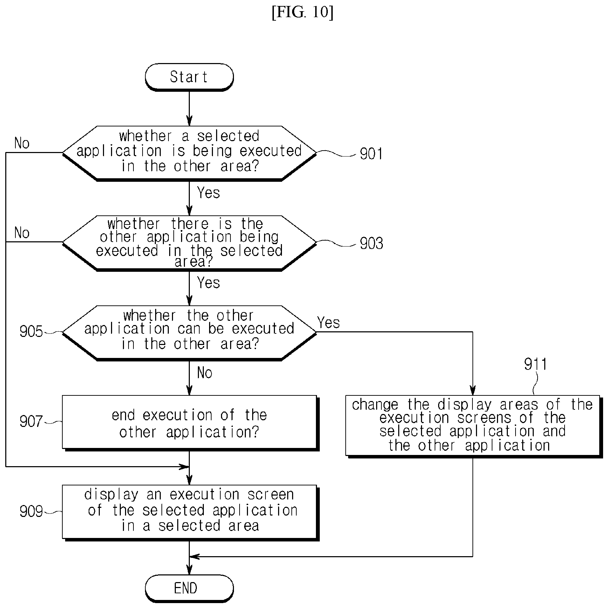

FIG. 10 is a detailed flowchart for executing an application with respect to a selected area in the control device of the construction equipment according to various embodiments of the present disclosure. Operations with reference to FIG. 10 hereinafter may be detailed operation of the operations 607 and 609 in FIG. 7. Hereinafter, each operation in FIG. 10 may be performed sequentially, but the operations are not required to be performed sequentially. For example, the order of the operations may be changed, and at least two operations may be performed in parallel. Hereinafter, operations of at least some of the components illustrated in FIG. 10 will be described with reference to FIG. 8.

Referring to FIG. 10, in an operation 901, the control device 110 may check whether a selected application is being executed in the other area. For example, when the camera application is selected as an application to be executed in the first division area 703 in FIG. 8, the control device 110 may check whether the camera application is being executed in the second division area 704, the third division area 711, or the fourth division area 712.

As a result of the check in the operation 901, when the selected application is not executed in the other area, the control device 110 may display an execution screen of the selected application in a selected area in an operation 909. For example, when the camera application is not being executed in the second division area 704, the third division area 711, and the fourth division area 712, the control device 110 may control to execute the camera application, and to display an execution screen thereof in the selected first division area 703.

As a result of the check in the operation 901, when the selected application is being executed in the other area, the control device 110 may check whether there is the other application being executed in the selected area in an operation 903. For example, when the camera application is being executed in the second division area 704, the control device 110 may check whether there is the other application being executed in the selected first division area 703.

As a result of the check in the operation 903, when there is no other application being executed in the selected area, the control device 110 may display an execution screen of the selected application in the selected area in an operation 909. For example, when there is no other application being executed in the selected first division area 703, the control device 110 may control to display an execution screen of the camera application in the selected first division area 703. At this time, the control device 110 may perform control such that an execution screen of the camera application is not displayed any more in the second division area 704. For example, the control device 110 may change an area in which an execution screen of the camera application is displayed, from the second division area 704 to the first division area 703.

As a result of the check in the operation 903, when there is the other application being executed in the selected area, the control device 110 may check whether the other application being executed in the selected area can be executed in the other area in an operation 905. Based on the table illustrated in FIG. 3, the control device 110 may check whether the other application being executed in the selected area can be executed in the other area. For example, when the selected camera application is being executed in the second division area 704, and the cluster application is being executed in the first division area 703, the control device 110 may check whether the cluster application can be executed in the second division area 703.

As a result of the check in the operation 905, when the other application being executed in the selected area can be executed in the other area, the control device 110 may change the display areas of the execution screens of the selected application and the other application in an operation 911. For example, when the cluster application is executable in the second division area 704, the control device 110 may change the display area of the execution screen of the cluster application from the first division area 703 to the second division area 704, and change the display area of the execution screen of the camera application from the second division area 704 to the first division area 703.

As a result of the check in the operation 905, when the other application being executed in the selected area cannot be executed in the other area, the control device 110 may end execution of the other application being executed in the selected area and control to display the execution screen of the selected application in the selected area in an operation 907. For example, when the cluster application is inexecutable in the second division area 704, the control device 110 may end execution of the cluster application and change the display area of the execution screen of the camera application from the second division area 704 to the first division area 703. Accordingly, the control device 110 may control the execution screen of the camera application to be displayed in the first division area 703.

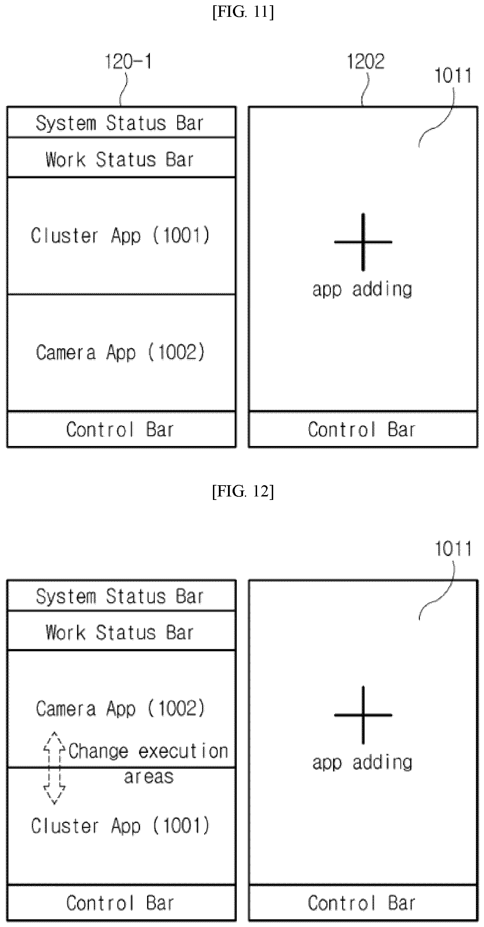

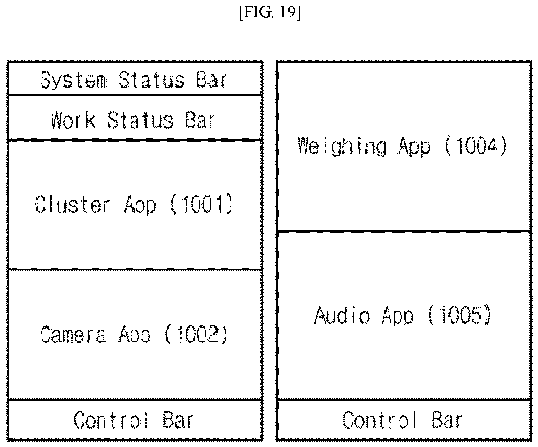

FIGS. 11 to 19 are example illustrations of a screen configuration which operates a plurality applications simultaneously according to various embodiments of the present disclosure.

FIGS. 11 to 14 illustrate a case in which the first display 120-1 which is the main display operates in the divided screen mode and the second display 120-2 which is the sub display operates in the entire screen mode.

Referring to FIG. 11, the control device 110 may control the first display 120-1 such that an execution screen of the cluster application 1001 is displayed in the first division area of the first display 120-1, and an execution screen of the camera application 1002 is displayed in the second division area thereof. In addition, the control device 110 may perform control such that an app adding screen 1011 which shows that execution of an application is possible can be displayed in a second entire area of the second display 120-2.

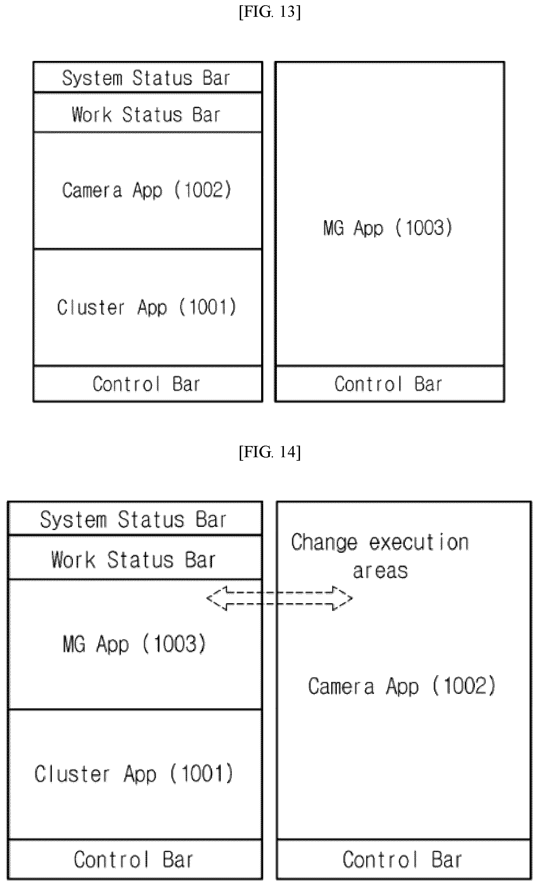

In a state as illustrated in FIG. 11, when execution of the camera application 1002 in the first division area is required by the user, the control device 110 may control the first display 120-1 such that the execution screen of the camera application 1002 is displayed in the first division area and the execution screen of the cluster application 1001 is displayed in the second division area, as illustrated in FIG. 12. That is, the control device 110 may change the execution areas of the cluster application 1001 and the camera application 1002. Thereafter, when the execution of the MG application 1003 in the second entire area, in which the app adding screen 1011 is displayed, is required by the user, the control device 110 may control the second display 120-2 such that the execution screen of the MG application 1003 is displayed in the second entire area, as illustrated in FIG. 13. Thereafter, when the execution of the MG application 1003 is required in the first division area by the user, as illustrated in FIG. 14, the control device 110 may control the first display 120-1 and the second display 120-2 such that the execution screen of the MG application 1003 is displayed in the first division area, and the execution screen of the camera application 1002 is displayed in the second entire area. That is, the control device 110 may change the execution areas of the camera application 1002 and the MG application 1003.

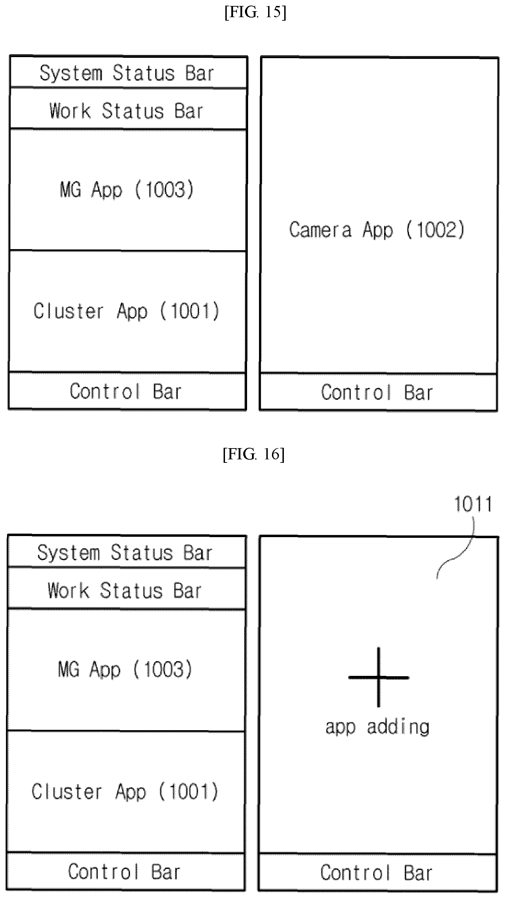

FIGS. 15 and 16 illustrate a case in which the first display 120-1 which is the main display operates in the divided screen mode and the second display 120-2 which is the sub display operates in the entire screen mode.

Referring to FIG. 15, the control device 110 may control the first display 120-1 and the second display 120-2 such that an execution screen of the MG application 1003 is displayed in the first division area of the first display 120-1, an execution screen of the cluster application 1001 is displayed in the second division area thereof, and an execution screen of the camera application 1002 is displayed in the second entire area of the second display 120-2. At this time, when the execution of the camera application 1002 in the second division area is required by the user, the control device 110 may perform control such that the execution screen of the camera application 1002 is displayed in the second division area and the app adding screen 1011 is displayed in the second entire area, as illustrated in FIG. 16. This is because execution of the cluster application 1001 which has been executed in the second division area in a second non-display area is impossible.

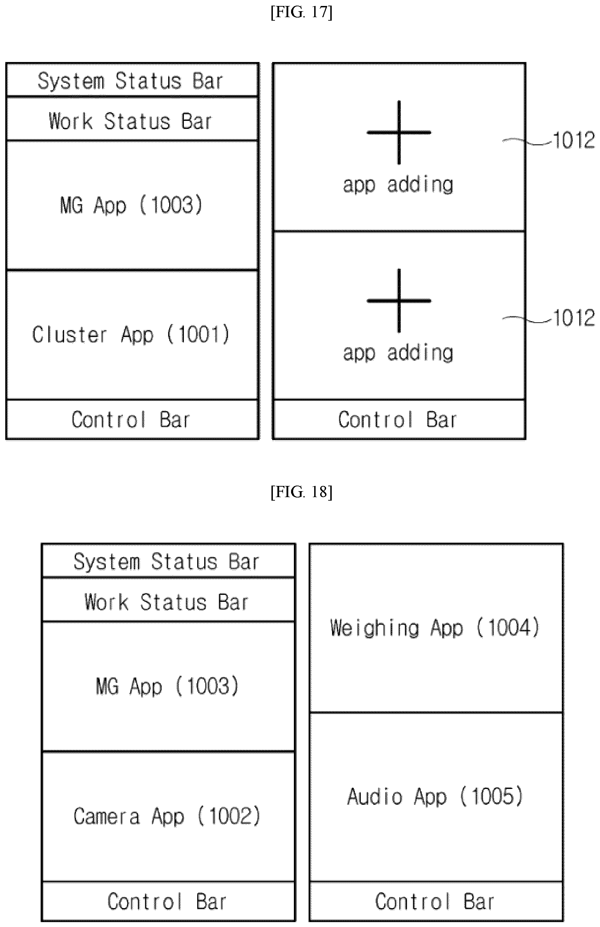

FIGS. 17 to 19 illustrate a case in which both the first display 120-1 which is the main display and the second display 120-2 which is the sub display operate in the divided screen mode.

Referring to FIG. 17, the control device 110 may perform control such that the execution screen of the MG application 1003 is displayed in the first division area of the first display 120-1, the execution screen of the camera application 1002 is displayed in the second division area of the first display 120-1, and app adding screens 1012 and 1013 are displayed in the third division area and the fourth division area of the second display 120-2. At this time, when the execution of the weighing application 1004 in the third division area is required and the execution of an audio application 1005 in the fourth division area is required by the user, the control device 110 may control the second display 120-2 such that the execution screen of the weighing application 1004 is displayed in the third division area and the execution screen of the audio application 1005 is displayed in the fourth division area, as illustrated in FIG. 18. Thereafter, when the execution of the cluster application 1001 in the first division area is required by the user, the control device 110 may end the execution of the MG application 1003 being executed in the first division area and control the first display 120-1 such that the execution screen of the cluster application 1001 is displayed in the first division area.

According to various embodiments of the present disclosure, it is possible to simultaneously operate a plurality of applications with only a limited quantity of display devices (e.g., dual display). Therefore, it is possible to reduce costs for purchasing a display for a new service, and to minimize the quantity of the displays being mounted inside the cabin of the construction equipment, thereby minimizing the interruption of a forward view of the driver.

## Claims

1. A system configured to operate applications of a construction equipment, comprising:
a plurality of displays; and
a control device connected to the plurality of displays through wired or wireless communication and configured to control to display execution screens of a plurality of applications in the plurality of displays,
wherein the control device is configured to:
determine a layout mode of each of the plurality of displays; and
control to display an execution screen of at least one application in each of the plurality of displays according to the determined layout mode, and
wherein the layout mode comprises at least one among an entire screen mode in which an execution screen of one application is displayed in a specified application display area, and a divided screen mode in which the specified application display area is divided into two or more areas and execution screens of different applications are displayed in each of the division areas.

2. The system of claim 1,
wherein the control device is configured to determine the layout mode according to attributes of the plurality of applications.

3. The system of claim 1,
wherein the control device is configured to:
provide a user interface capable of setting the layout mode of the plurality of displays through one among the plurality of displays; and
set up the layout mode of at least one among the plurality of displays based on an input by a user through the user interface.

4. The system of claim 3,
wherein the control device is configured to:
determine one among the plurality of displays to be a main display and a remaining one thereof to be a sub display based on the input by a user through the user interface; and
dispose one specified application among the plurality of applications in the main display or the sub display with priority.

5. The system of claim 4,
wherein when the layout mode of the main display is the divided screen mode, the control device is configured to:
divide application display area of the main display into two or more division areas; and
dispose the specified application in a first division area among the two or more division areas with priority.

6. The system of claim 5,
wherein the control device is configured to dispose an application other than the specified application in a second division area among the two or more division areas.

7. The system of claim 3,
wherein the control device is configured to:
determine a main display based on at least one among size information of each of display areas of the plurality of displays, resolution information of each of the plurality of displays, communication method information of each of the plurality of displays and order information of the plurality of displays connected to the control device, and
provide the user interface through the main display.

8. The system of claim 1,
wherein when a layout mode of a first display among the plurality of displays is the divided screen mode, the control device is configured to:
divide application display area of the first display into two or more division areas; and
control the first display such that each of the two or more division areas displays execution screens of different applications based on an input by a user with respect to the two or more division areas.

9. The system of claim 1,
wherein when an event of selecting an application to be executed is detected with respect to an entire area of the entire screen mode or each of the division areas of the divided screen mode according to the layout mode determined for each of the plurality of displays, the control device is configured to:
display a list of applications executable in the area in which the event of selecting an application to be executed is detected;
select one application from the list; and
control an execution screen of the selected application to be displayed in the area in which the event of selecting an application to be executed is detected.

10. The system of claim 1,
wherein in a state in which an execution screen of a first application is displayed in a first area of one display among the plurality of displays, the control device is configured to:
detect an input by a user requiring execution of a second application in the first area;
change an area in which the execution screen of the first application is displayed to a second area according to an attribute of the first application in response to the input by a user; and
control an execution screen of the second application to be displayed in the first area.

11. A system configured to operate applications of a construction equipment, comprising:
two different displays; and
a control device connected to the two displays through wired or wireless communication and configured to control to display execution screens of a plurality of applications in the two displays,
wherein the control device is configured to:
determine a layout mode of each of the two displays based on a plurality of applications selected by a user and the two displays; and
control to display an execution screen of at least one application in each of the two displays according to the determined layout mode.

12. The system of claim 11,
wherein the layout mode comprises at least one among an entire screen mode in which an execution screen of one application is displayed in a specified application display area, and a divided screen mode in which the specified application display area is divided into two or more areas and execution screens of different applications are displayed in each of the division areas, and
wherein the control device is configured to determine the layout mode according to attributes of each of the plurality of applications selected by a user.

13. A method for operating a control device provided in a construction equipment, comprising:
controlling to display execution screens of a plurality of applications in a plurality of displays provided in the construction equipment,
wherein the controlling to display execution screens of a plurality of applications comprises:
determining a layout mode of each of the plurality of displays; and
controlling to display an execution screen of at least one application in each of the plurality of displays according to the determined layout mode, and
wherein the layout mode comprises at least one among an entire screen mode in which an execution screen of one application is displayed in a specified application display area, and a divided screen mode in which the specified application display area is divided into two or more areas and execution screens of different applications are displayed in each of the division areas.

14. The method of claim 13,
wherein the determining a layout mode of each of the plurality of displays comprises:
determining one among the plurality of displays to be a main display; and
setting up a layout mode of at least one among the plurality of displays based on an input by a user.

15. The method of claim 13,
wherein the controlling to display an execution screen of at least one application in each of the plurality of displays according to the determined layout mode comprises:
when a layout mode of a first display among the plurality of displays is the divided screen mode,
dividing application display area of the first display into two or more areas; and
controlling the first display such that each of the two or more areas displays execution screens of different applications based on an input by a user with respect to the two or more areas.

16. The method of claim 13,
wherein the controlling to display an execution screen of at least one application in each of the plurality of displays according to the determined layout mode comprises:
when an event of selecting an application to be executed is detected with respect to an entire area of the entire screen mode or each of the division areas of the divided screen mode according to the layout mode determined for each of the plurality of displays,
displaying a list of applications executable in the area in which the event of selecting an application to be executed is detected;
selecting one application from the list; and
controlling an execution screen of the selected application to be displayed in the area in which the event of selecting an application to be executed is detected.

17. The method of claim 13,
wherein the controlling to display an execution screen of at least one application in each of the plurality of displays according to the determined layout mode comprises:
displaying an execution screen of a first application in a first area of one display among the plurality of displays according to the determined layout mode;
detecting an input by a user requiring execution of a second application in the first area; and
changing an area in which the execution screen of the first application is displayed to a second area according to an attribute of the first application in response to the input by a user; and
displaying an execution screen of the second application in the first area.
